Europäisches Patentamt

European Patent Office

Office européen des brevets

(19)

(11) EP 0 826 924 A2

(12) EUROPEAN PATENT APPLICATION

(43) Date of publication:
04.03.1998 Bulletin 1998/10

(51) Int Cl.⁶: F22B 31/04, F23G 5/46

(21) Application number: 97306245.8

(22) Date of filing: 18.08.1997

(84) Designated Contracting States:
AT BE CH DE DK ES FI FR GB GR IE IT LI LU MC NL PT SE
Designated Extension States:
AL LT LV RO SI

(30) Priority: 28.08.1996 JP 244053/96

(71) Applicant: Saitoh, Shigeru
Iwaki-shi, Fukushima 974 (JP)

(72) Inventor: Saitoh, Shigeru
Iwaki-shi, Fukushima 974 (JP)

(74) Representative: Bannerman, David Gardner et al
Withers & Rogers
4 Dyer's Buildings
Holborn
London, EC1N 2JT (GB)

(54) **Electric power generating system combined with waste incinerating furnace**

(57) For increasing the net electric power generating efficiency up to 30% with safe and stable operation, an electric power generating system combined with a waste-incinerating furnace and a fossil fuel boiler is proposed. The exhaust gas from the waste-incinerating furnace is used as a heat source for heating the air for the fossil fuel combustion and the combustion residues and exhaust gases containing corrosive substances are separated from the boiler system to reduce contamination and corrosion thereof.

FIG. 1

## Description

This invention relates to an electric power generating system with a waste-incinerating furnace.

The heat generated from waste incinerating furnaces has been directly used to generate steam by means of a boiler for the purpose of making good use of the heat generated by such furnaces.

However, frequent removal of residual ash adhering to the water tube of the boiler is required, and further the water tubes of the boiler may be exposed to hot HCl or $SO_2$ from the waste being burnt resulting in corrosion of the water tubes which leads to very dangerous situations when operating the boiler at high pressures.

Accordingly, boilers using heat from incinerating waste have normally been operated below 300°C and 30 atm, and it is difficult from the viewpoint of the industrial technology to increase the boiler temperature above 450°C and the boiler pressure above 50 atm. Consequently it is very difficult to operate the boiler over an efficiency as high as 25%.

It has been proposed to combine a waste-incinerating furnace with a gas turbine to increase electric power generating efficiency which might be much more applicable to an LNG electric power generating system or an oil electric power generating system, but it has not been commercially realized yet. Consequently the combination with gas turbine is not considered to be economical. (See Nihon Kogyo Sha PPM-1994/7, pages 17, 20, 41, 52 and 53).

The objective of this invention is to increase the net efficiency of the system defined as formula (1) to over 30% under conditions of safe and stable operation, by utilizing the heat generated by a waste incinerating furnace, which has been difficult so far.

$$\frac{860Tp - Hf \cdot Ep}{Hw} \qquad \text{Formula (1)}$$

Where

Tp:     Total generated electric power (kWh)
Hf:     Heat generated from fossil fuel (kcal)
Ep:     Electric power generating efficiency of an independent fossil fuel power plant
Hw:     Heat generated from incinerated waste (kcal)

The invention provides an electric power generating system combined with a waste-incinerating furnace having a heat exchanger, involving incinerating waste in the furnace, introducing air independently into the heat exchanger to heat it to a high temperature, and supplying the heated air for combustion of fossil fuel.

Fig.1 is a schematic diagram of the system of this invention.

Fig.2 us a schematic diagram of a conventional furnace for industrial waste.

Fig.3 is a schematic diagram of the heat exchanger 3 used in Fig.1.

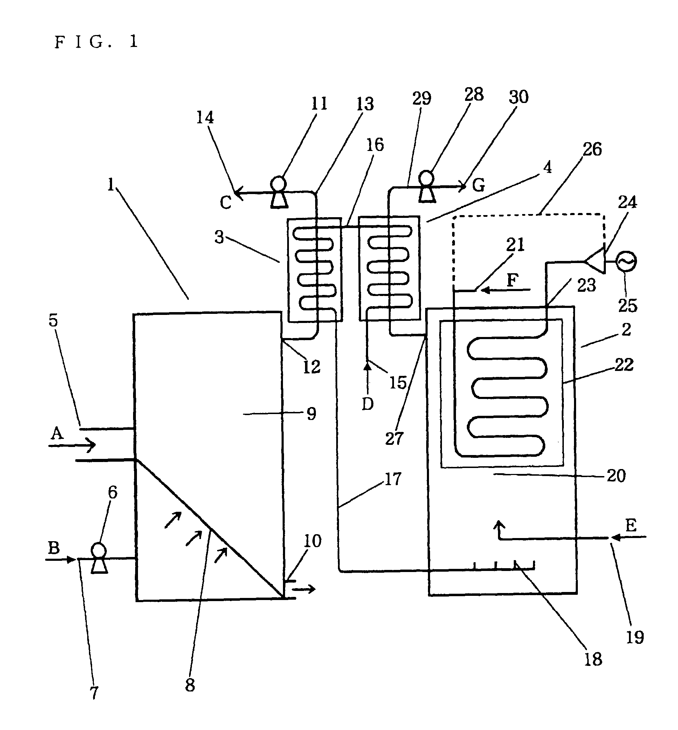

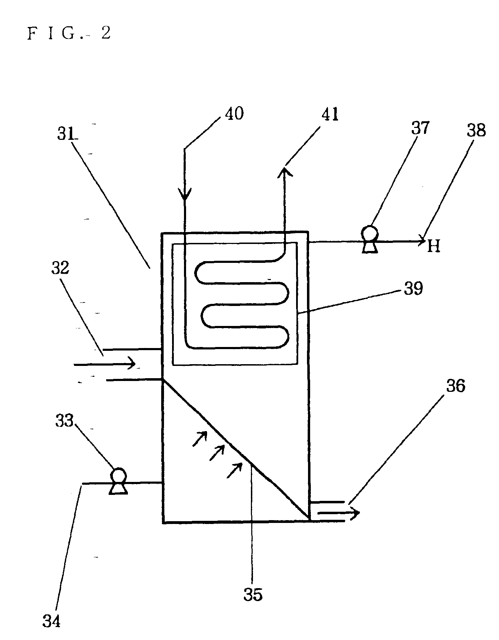

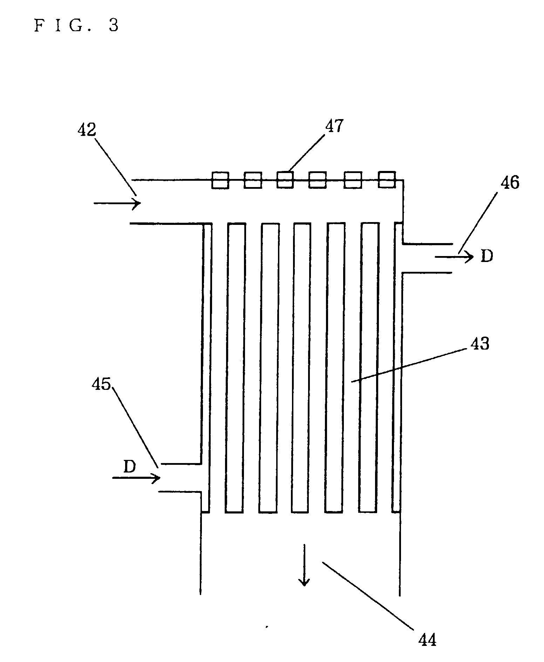

The invention is explained in more detail by way of example only and with reference to the attached drawings in which: FIG.1 is a schematic view of a system of this invention. FIG.2 is a conventional industrial waste incinerating furnace. FIG.3 is a different version of the heat exchanger 3 shown in FIG.1

As indicated in FIG.1 the system of this invention essentially comprises a waste incinerating furnace 1, a fossil-fuel boiler 2, a heat exchanger (air heating apparatus) 3 and a heat exchanger (air-heater) 4.

Waste A is introduced into the furnace 1 through an inlet 5, the air for incineration is supplied to a combustion chamber 9 through an air inlet 7 and furnace bottom 8 by a blower fan 6 and the waste is incinerated in the combustion chamber 9.

Combustion residue is removed via an outlet 10 while the combustion exhaust gas is withdrawn through a gas outlet 12 via a conduit tube 13 by an inducing fan 11. The exhaust gas C passed through the heat exchanger (air heating apparatus) 3.

The exhaust gas C loses its heat through the heat exchanger 3 and is emitted from a flue 14 via a conduit tube 13, or a contaminant remover if necessary.

The fresh air D independently induced from an air inlet 15 is pre-heated while passing through the heat exchanger (air pre-heater) 14. Further, the air is sent to the heat exchanger 4 via conduit 16 and heated to high temperature and injected into the fossil fuel boiler from an injection tube 18 via conduit 17 for incineration.

Fresh air D is normally heated up from 400°C to 800°C by the combustion exhaust gas by heat exchanger 4 and 3 and the heated air D is sent to fossil fuel boiler 2.

Fossil fuel E is sent to the fossil fuel boiler 2 through fuel pipe 19. Thereafter, fossil fuel E is burnt in the combustion chamber 20 with the high temperature air injected from the air injection tube 18. Water F purified by an ion exchanger which is introduced through a water inlet 21 disposed at the upper portion of the combustion chamber 20, is heated at heater 22, generating high pressure steam which is exhausted from an outlet 23 and drives a turbine 24 and an electricity generator 25, 26 indicates a condensation circuit.

On the other hand, combustion exhaust gas G cooled down through the heater 22 is emitted from combustion exhaust gas outlet 27, and then pre-heats the air while passing the heat exchanger 4. The exhaust gas G is emitted from the flue 30 through the conduit tube 29 by induction fan 28.

As the fresh heated air D for combusting the fossil fuel in the boiler itself is uncontaminated it cannot deposit ash onto the fossil fuel boiler 2, nor cause any corrosion.

In this invention the waste-incinerating furnace 1 may be any type of incinerating furnace used to incinerate urban waste in general and also industrial waste.

In some cases, it is desirable to provide an apparatus to maintain the air inlet 5 and the combustion residue outlet 10 at reduced pressure.

In other words, it is preferable to operate the waste-incinerating furnace by controlling the exhaust gas volume of the fan 6 for an induction and volume of the inducing fan 11 appropriately so as to reduce the inner air pressure in the waste-incinerating furnace 1 to lower than the atmospheric pressure, for instance, from - 1 to - 20mmH $_2$ 0.

Further, any fossil fuels including crude oil, heavy oil, gas oil, natural gas or coal can be burnt in the boiler 2 of this system, as long as they can be completely combusted.

FIG.2 illustrates a conventional waste-incinerating furnace 31. In-this incinerator, waste is introduced from an inlet 32, while the air is introduced by a fan 33 through air inlet 34 into the furnace bottom 35 for incinerating the waste. Combustion residues are exhausted from a residue outlet 36 and the combustion gas is exhausted from flue 38 by the fan 37. Thus, heater 39 directly receives the heat from the combustion exhaust gas from the waste incinerating furnace 31. Water is supplied from water inlet 40, and medium or high temperature and medium or high pressure steam is obtained from steam outlet 41, which is used for generating electric power. However, as the surfaces of the water tubes of the boiler become contaminated very soon by combustion residue, the water tubes should be protected against corrosion. Therefore the temperature of the metal of the tubes should be kept below 400°C and the steam temperature below 300°C.

Accordingly, the power generation efficiency of waste-incinerating furnaces has remained as low as 10 to 15%. (Refer to materials of Nihon Kogyo Sha PPM 1994/7, pages 18,19 and 41).

FIG.3 is a side view of another type of an air heater of this invention.

The high temperature waste combustion exhaust gas is introduced into the heater through an inlet 42 and exhausted through an outlet 44 via a plurality of small tubes 43.

Filtered air D for combusting the fossil fuel flows into the heat exchanger through an inlet 45, is heated by the high temperature exhaust gas from the waste furnace, and flows out from an exhaust outlet 46 as the heated air D for fossil fuel combustion.

Reference numeral 47 indicates an apparatus for removing combustion residues which become deposited while passing through between a plurality of small tubes.

Example 1

In FIG.1 and FIG.3, the combustion air for the fossil fuel is heated to 200°C by the heat exchanger 4 with combustion exhausted gas of the fossil fuel and is further heated up to 500°C through the heat exchanger 3 which is a multi-tube heat exchanger where the waste combustion exhaust gas passes inside the tubes and the combustion air for the fossil fuel flows outside the tubes. As the total heat recovery rate at the heat exchangers is 75%, in case the power generation efficiency of the fossil fuel power plant is 38%, then the net electric power generation efficiency of the waste will be 28.5% according to the formula (1).

The capacity of the waste-incineration furnace and the fossil fuel electric power generation plant combined with the waste-incineration furnace is 30 million kcal/hr (equivalent to 360 ton/day of urban waste) for the former one, and 100,000kw/hr for the latter one, and the saving rate of the fossil fuel consumption by using the waste incineration heat will become 10% reduction compared with an independent fossil fuel power plant.

Furthermore, if the waste-incinerating furnace is operated under slightly reduced pressure, for instance - 10mm H $_2$ 0, the combustion residues adhering to the small tubes 43 of the heat exchanger indicated in Fig.3 can be removed without stopping the operation of the waste-incinerating furnace by removing the cover of the apparatus 47.

The apparatus was constructed so that the small pipes for air heating in heat exchanger 3 used for the waste-incinerating furnace are not as operated at high pressure, and there is therefore less risk in case of breakage of the pipes, -and less deposition of combustion residues because the water does not flow inside the tubes, so that better durability can be expected. The fossil fuel boiler can be operated continuously without special cleaning because the fossil fuel and air are pure compared with the waste, and further as high temperature air for incinerating the fossil fuel is used, the heat efficiency of the boiler is raised to about 60% in comparison with about 40% in conventional oil-fired boilers.

When the waste-incinerating furnace is operated under reduced pressure, there should be no need to stop the operation of the boiler and the electric power generation system for cleaning the heat exchanger installed with the waste incinerating furnace, as the deposits of the combustion residue on the small tubes are easily removed which is a great advantage of this invention.

As the system of this invention can be operated continuously and safely for a long period of time, a big scale system may be designed, which is also an advantage of this invention.

**Claims**

1. An electric power generating system comprising a waste-incinerating furnace, a heat exchanger for transferring heat from said waste-incinerating furnace to clean air and a fossil fuel generating boiler to which the heated clean air is supplied.

2. The electric power generating system of claim 1 wherein the waste is incinerated under reduced pressure in said waste-incinerating furnace.

F I G. 1

F I G . 2

F I G . 3